# FASCICULE DE BREVET EUROPEEN

(11) **EP 2 288 851 B1**
(45) Date de publication et mention de la délivrance du brevet: **23.11.2016**
(21) Numéro de dépôt: 09711221.3
(22) Date de dépôt: 04.02.2009
(51) Int. Cl.: F23D 14/22, F23D 14/84, C03B 5/235, F23C 5/14

(54) **INJECTEUR GAZ A BAS NOX**
INJEKTOR FÜR NOX-ARMES GAS
LOW-NOX GAS INJECTOR

(30) Priorité: 05.02.2008 FR 0850701
(43) Date de publication de la demande: 02.03.2011
(73) Titulaire: Saint-Gobain Glass France, 92400 Courbevoie (FR); SAINT-GOBAIN EMBALLAGE, 92400 Courbevoie (FR)
(72) Inventeur: ROUCHY, Patrice, F-92420 Vaucresson (FR); GARNIER, Laurent, F-71620 Saint Martin En Bresse (FR); MAZZOTTI DE OLIVEIRA, Carlos, 13209-355 Jundiai - Sao Paulo (BR); VERNAZ, Joseph, F-01150 Vaux En Bugey (FR)
(74) Mandataire: Saint-Gobain Recherche
(86) Numéro de dépôt international: PCT/FR2009/050169
(87) Numéro de publication internationale: WO 2009/101326

(56) Documents cités:
- EP-A- 0 877 202
- US-A- 3 685 740
- US-A1- 2007 037 106

## Description

L'invention concerne un procédé et dispositif de combustion dans lequel l'alimentation en combustible est assurée par au moins un injecteur.

L'invention sera plus particulièrement décrite pour une utilisation pour la fusion du verre dans les fours de verrerie, notamment les fours pour la fabrication de verre plat de type float ou les fours pour la fabrication de verre creux d'emballage, par exemple les fours fonctionnant en inversion du type de ceux utilisant des régénérateurs mais elle n'est pas pour autant limitée à de telles applications.

La plupart des procédés de combustion du type précité notamment ceux utilisés dans les fours de verrerie sont confrontés à des problèmes d'émission non désirée de NOx dans les fumées de combustion.

Les NOx ont une influence néfaste à la fois sur l'être humain et sur l'environnement. En effet, d'une part le NO₂ est un gaz irritant à la source des maladies respiratoires. D'autre part, au contact de l'atmosphère, ils peuvent former progressivement des pluies acides. Enfin, ils engendrent une pollution photochimique puisqu'en combinaison avec les composés organiques volatiles et le rayonnement solaire, les NOx sont à l'origine de la formation de l'ozone dite troposphérique dont l'augmentation de concentration à basse altitude devient nocive pour l'être humain, surtout en période de forte chaleur.

C'est pourquoi les normes en vigueur sur l'émission de NOx deviennent de plus en plus exigeantes. Du fait même de l'existence de ces normes, les fabricants et les exploitants de four, tels que ceux des fours verriers, se préoccupent, de manière constante, de limiter au maximum les émissions de NOx, de préférence à un taux de 800 mg par Nm³ de fumées pour un four à brûleurs transversaux ou de 600 mg par Nm³ de fumées pour un four à boucle.

Les paramètres qui influent sur la formation des NOx ont déjà été analysés. Il s'agit essentiellement de la température, car au-delà de 1300°C l'émission des NOx croît de manière exponentielle, de l'excès d'air puisque la concentration des NOx dépend de la racine carrée de celle de l'oxygène ou encore de la concentration en N₂.

De nombreuses techniques ont déjà été proposées pour réduire l'émission des NOx.

Une première technique consiste à faire intervenir un agent réducteur sur les gaz émis afin que les NOx soient convertis en azote. Cet agent réducteur peut être de l'ammoniac mais cela induit des inconvénients tels que la difficulté de stocker et manipuler un tel produit. Il est également possible d'utiliser un gaz naturel comme agent réducteur, mais cela se fait au détriment de la consommation du four et augmente les émissions de CO₂. La présence de gaz réducteurs tels que le monoxyde de carbone dans certaines parties du four telles que les régénérateurs peut de plus provoquer une corrosion accélérée des réfractaires de ces zones.

Il est donc préférable, sans que cela soit obligatoire, de s'affranchir de cette technique en adoptant des mesures dites primaires. Ces mesures sont ainsi appelées car on ne cherche pas à détruire les NOx déjà formés, comme dans la technique décrite ci-dessus, mais plutôt à empêcher leur formation, par exemple au niveau de la flamme. Ces mesures sont en outre plus simples à mettre en oeuvre et, par conséquent, plus économiques. Elles peuvent toutefois ne pas se substituer complètement à la technique précitée mais venir la compléter avantageusement. Ces mesures primaires constituent de toute façon un préalable indispensable pour diminuer la consommation de réactifs des mesures secondaires.

On peut classer de manière non limitative les mesures existantes en plusieurs catégories :
- une première catégorie consiste à réduire la formation de NOx à l'aide de la technique dite de "reburning" par laquelle on crée une zone en défaut d'air au niveau de la chambre de combustion d'un four. Cette technique présente l'inconvénient d'augmenter la température au niveau des empilages de régénérateurs et, le cas échéant, de prévoir une conception spécifique des régénérateurs et de leurs empilements, tout particulièrement en termes d'étanchéité et de résistance à la corrosion ;
- une deuxième catégorie consiste à agir sur la flamme en réduisant voire empêchant la formation des NOx à son niveau. Pour cela, on peut par exemple chercher à réduire l'excès d'air de combustion. Il est également possible de chercher à limiter les pics de température en maintenant la longueur de flamme, et à augmenter le volume du front de flammes pour réduire la température moyenne au sein de la flamme. Une telle solution est par exemple décrite dans les US6047565 et WO9802386. Elle consiste en un procédé de combustion pour la fusion du verre, dans lequel l'alimentation en combustible et l'alimentation en comburant s'effectuent toutes deux de manière à étaler dans le temps le contact combustible/comburant et/ou à augmenter le volume de ce contact en vue de réduire l'émission des NOx.

Rappelons qu'un injecteur est dédié à la propulsion de combustible, ce dernier ayant vocation à être brûlé par un comburant. Ainsi, l'injecteur peut faire partie d'un brûleur, le terme brûleur désignant généralement le dispositif comprenant à la fois l'amenée de combustible et celle de comburant.

Le combustible est liquide du type fioul, ou gazeux tel que gaz naturel. Certains injecteurs, tels que décrits dans FR 2 834 774 par exemple, combinent au moins une amenée de combustible liquide et une de combustible gazeux.

Il est d'autre part connu que les combustibles gazeux sont plus producteurs de NOx que le fioul.

L'invention a pour but la conception d'un procédé de combustion ne mettant en oeuvre que du combustible gazeux, mais ne produisant que des quantités relativement faibles de NOx.

Ce but est atteint par l'invention qui a pour objet un procédé de combustion selon la revendication 1.

Le jet central de gaz haute pression détermine la longueur de flamme, tandis que le débit global de gaz (basse et haute pression) détermine la puissance de la flamme. Le procédé de l'invention permet de maintenir constante une longueur de flamme en modifiant la puissance, ainsi que l'inverse.

Les jets périphériques de gaz basse pression convergents retardent la prise de volume de la flamme.

Ainsi le nombre de possibilités de réglage est-il augmenté, notamment avec raccourcissement de la flamme et diminution de l'émission de NOx.

Selon des caractéristiques préférées du procédé de l'invention :
- 70 à 90%, de préférence 75 à 85% de la puissance calorifique a pour origine le gaz basse pression ;
- l'angle de convergence des jets périphériques de gaz basse pression vers le jet central de gaz haute pression est compris entre 4 et 10°, de préférence entre 5 et 8° ;
- le nombre de jets périphériques de gaz basse pression est compris entre 4 et 16, de préférence 8 et 12 ;
- tous les jets périphériques de gaz basse pression ont les mêmes caractéristiques : section, débit, angle de convergence vers l'axe du jet central de gaz haute pression.

L'invention a également pour objet un injecteur selon la revendication 6.

De préférence les sections droites des trous - c'est-à-dire dans des plans perpendiculaires à l'axe des trous - ont des périmètres circulaires.

D'autres objets de l'invention sont :
- un brûleur comprenant un ou plusieurs injecteurs décrits ci-dessus ;
- un four, notamment à boucle ou à brûleurs transversaux, comprenant au moins un tel brûleur ; et
- l'application du procédé, de l'injecteur, du brûleur ou du four de l'invention pour limiter les émissions de NOx.

L'invention est maintenant illustrée par l'exemple suivant, en référence aux dessins annexés dans lesquels
- la Figure 1 est une vue de face d'une rondelle faisant partie d'un injecteur de l'invention, et
- la Figure 2 est une vue en coupe de cette rondelle.

La rondelle 1 comporte dix trous 2 régulièrement espacés autour de l'axe 3.

Les trous 2 circulaires convergent d'un angle de 6° vers l'axe 3.

Par ailleurs la rondelle 1 comporte un trou central destiné à recevoir le jet central de gaz haute pression, tandis que les jets périphériques de gaz basse pression passent par les trous convergents 2.

Des essais sont effectués dans un four à boucle de 44 m².

On travaille dans une première phase avec un injecteur alternativement en partie droite et gauche du four.

Il s'agit d'un injecteur double impulsion gaz ne se différenciant de celui de l'invention que par l'absence de jets basse pression individualisés et convergents.

Dans cet exemple, l'injecteur est en position centrale sous la veine d'air avec un angle de 5° vers le haut, la veine d'air étant dirigée vers le bas d'un angle de 22°. L'injecteur est incliné de 3° d'azimut vers l'axe central intérieur du four.

Les valeurs sont données à 8% d'O₂ et 5000 ppm de CO.

La puissance de l'injecteur est maintenue constante à 8000 kW.

L'émission de NOx est de 687 mg/Nm³ pour une impulsion spécifique Ispé (définie comme le rapport de l'impulsion totale du jet de combustible à la puissance calorifique) de 4N/MW.

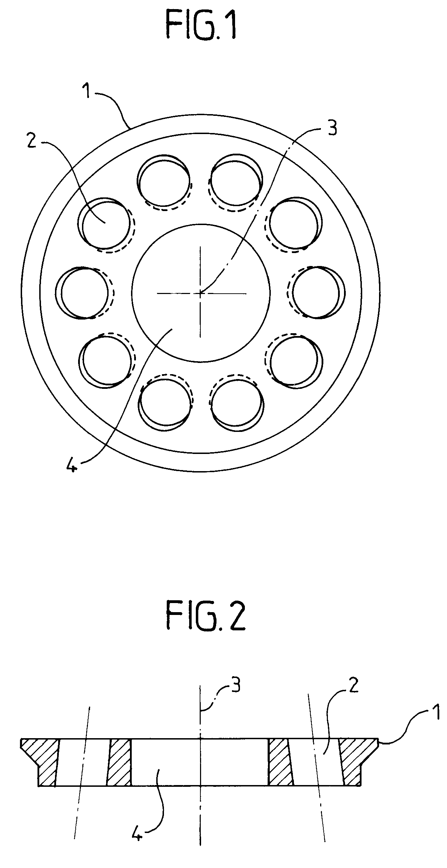

L'injecteur est maintenant modifié conformément à l'invention, par l'utilisation de la rondelle des Figures 1 et 2.

A une impulsion spécifique de 4 N/MW, l'émission de NOx descend à 587 mg/Nm³.

Le document US 2007/037106 A1 décrit un procédé de combustion pour la fusion de verre comprenant la création d'une flamme par du combustible gazeux, et plusieurs jets périphériques de gaz combustibles régulièrement espacés les uns des autres et qui convergent vers un jet central de gaz combustible.

## Revendications

1. Procédé de combustion, notamment pour la fusion du verre, dans lequel une flamme est créée par du combustible gazeux et dans lequel plusieurs jets périphériques de gaz basse pression régulièrement espacés les uns des autres convergent vers un jet central de gaz haute pression, ledit procédé mettant en oeuvre un injecteur qui comprend un conduit d'amenée de gaz haute pression circonscrit dans un conduit coaxial d'amenée de gaz basse pression dont le débouché est totalement obstrué par une rondelle (1) munie de trous (2) de sections identiques, régulièrement espacés autour de l'axe (3) desdits conduits d'amenée et convergeant tous du même angle vers cet axe (3), les jets périphériques de gaz basse pression passant par les trous (2) convergents et la rondelle (1) comportant un trou central (4) recevant le jet central de gaz haute pression.

2. Procédé selon la revendication 1, **caractérisé en ce que** 70 à 90%, de préférence 75 à 85% de la puissance calorifique a pour origine le gaz basse pression.

3. Procédé selon l'une des revendications précédentes, **caractérisé en ce que** l'angle de convergence des jets périphériques de gaz basse pression vers le jet central de gaz haute pression est compris entre 4 et 10°, de préférence entre 5 et 8°.

4. Procédé selon l'une des revendications précédentes, **caractérisé en ce que** le nombre de jets périphériques de gaz basse pression est compris entre 4 et 16, de préférence 8 et 12.

5. Procédé selon l'une des revendications précédentes, **caractérisé en ce que** tous les jets périphériques de gaz basse pression ont les mêmes caractéristiques.

6. Injecteur pour mettre en oeuvre un procédé selon l'une des revendications précédentes, comprenant un conduit d'amenée de gaz haute pression circonscrit dans un conduit coaxial d'amenée de gaz basse pression dont le débouché est totalement obstrué par une rondelle (1) munie de trous (2) de sections identiques, régulièrement espacés autour de l'axe (3) desdits conduits d'amenée et convergeant tous du même angle vers cet axe (3),
les jets périphériques de gaz basse pression passant par les trous (2) convergents et la rondelle (1) comportant un trou central (4) destiné à recevoir le jet central de gaz haute pression.

7. Injecteur selon la revendication 6, **caractérisé en ce que** les sections droites des trous ont des périmètres circulaires.

8. Brûleur comprenant un ou plusieurs injecteurs selon l'une des revendications 6 ou 7.

9. Four, notamment à boucle ou à brûleurs transversaux, comprenant au moins un brûleur selon la revendication 8.

10. Application du procédé selon l'une des revendications 1 à 5, ou de l'injecteur selon la revendication 6 ou 7, ou du brûleur selon la revendication 8, ou du four selon la revendication 9, pour limiter les émissions de NOx.

## Patentansprüche

1. Verbrennungsverfahren, insbesondere für das Erschmelzen von Glas, bei dem eine Flamme durch gasförmigen Brennstoff erzeugt wird und bei dem mehrere umfängliche Niederdruckgasstrahlen, die gleichmäßig voneinander beabstandet sind, zu einem zentralen Hochdruckgasstrahl hin konvergieren, wobei das Verfahren einen Injektor verwendet, der eine Hochdruckgas-Zuleitung umfasst, die in einer koaxialen Niederdruckgas-Zuleitung umgrenzt ist, deren Ausgang vollständig durch eine Scheibe (1) versperrt ist, die mit Löchern (2) mit identischen Querschnitten versehen sind, die um die Achse (3) der Zuleitungen gleichmäßig beabstandet sind und alle im gleichen Winkel zu dieser Achse (3) hin konvergieren, wobei die umfänglichen Niederdruckgasstrahlen durch die konvergierenden Löcher (2) verlaufen und wobei die Scheibe (1) ein zentrales Loch (4) aufweist, das den zentralen Hochdruckgasstrahl aufnimmt.

2. Verfahren nach Anspruch 1, **dadurch gekennzeichnet, dass** 70 bis 90 %, vorzugsweise 75 bis 85 %, der Wärmeleistung vom Niederdruckgas stammt.

3. Verfahren nach einem der vorhergehenden Ansprüche, **dadurch gekennzeichnet, dass** der Konvergenzwinkel der umfänglichen Niederdruckgasstrahlen zu dem zentralen Hochdruckgasstrahl hin zwischen 4 und 10°, vorzugsweise zwischen 5 und 8°, beträgt.

4. Verfahren nach einem der vorhergehenden Ansprüche, **dadurch gekennzeichnet, dass** die Anzahl der umfänglichen Niederdruckgasstrahlen zwischen 4 und 16, vorzugsweise zwischen 8 und 12, beträgt.

5. Verfahren nach einem der vorhergehenden Ansprüche, **dadurch gekennzeichnet, dass** sämtliche umfänglichen Niederdruckgasstrahlen die gleichen Merkmale haben.

6. Injektor für die Durchführung eines Verfahrens nach einem der vorhergehenden Ansprüche, der eine Hochdruckgas-Zuleitung umfasst, die in einer koaxialen Niederdruckgas-Zuleitung umgrenzt ist, deren Ausgang vollständig durch eine Scheibe (1) versperrt ist, die mit Löchern (2) mit identischen Querschnitten versehen sind, die um die Achse (3) der Zuleitungen gleichmäßig beabstandet sind und alle im gleichen Winkel zu dieser Achse (3) hin konvergieren, wobei die umfänglichen Niederdruckgasstrahlen durch die konvergierenden Löcher (2) verlaufen und wobei die Scheibe (1) ein zentrales Loch (4) aufweist, das für die Aufnahme des zentralen Hochdruckgasstrahls bestimmt ist.

7. Injektor nach Anspruch 6, **dadurch gekennzeichnet, dass** die Querschnitte der Löcher kreisförmige Umfänge haben.

8. Brenner, umfassend einen oder mehrere Injektoren nach einem der Ansprüche 6 oder 7.

9. Ofen, insbesondere Wannenofen oder Ofen mit Querflammbrennern, umfassend mindestens einen Brenner nach Anspruch 8.

10. Anwendung des Verfahrens nach einem der Ansprüche 1 bis 5, oder des Injektors nach Anspruch 6 oder 7, oder des Brenners nach Anspruch 8, oder des Ofens nach Anspruch 9 zur Begrenzung der NOx-Emissionen.

## Claims

1. Combustion process, especially for melting glass, in which a flame is created by gaseous fuel and in which several regularly spaced peripheral low-pressure gas jets converge on a central high-pressure gas jet, said process using an injector that comprises a high-pressure gas feed duct circumscribed in a coaxial low-pressure gas feed duct, the outlet of which is completely obstructed by a flat ring (1) provided with holes (2) of identical cross section, these being regularly spaced around the axis (3) of said feed ducts and all converging at the same angle on said axis (3), the peripheral low-pressure gas jets passing through the converging holes (2) and the flat ring (1) including a central hole (4) intended to receive the central high-pressure gas jet.

2. Process according to Claim 1, **characterized in that** 70 to 90%, preferably 75 to 85%, of the calorific power stems from the low-pressure gas.

3. Process according to either of the preceding claims, **characterized in that** the angle of convergence of the peripheral low-pressure gas jets toward the central high-pressure gas jet is between 4° and 10°, preferably between 5° and 8°.

4. Process according to one of the preceding claims, **characterized in that** the number of peripheral low-pressure gas jets is between 4 and 16, preferably between 8 and 12.

5. Process according to one of the preceding claims, **characterized in that** all the peripheral low-pressure gas jets have the same characteristics.

6. Injector for implementing a process as claimed in one of the preceding claims, comprising a high-pressure gas feed duct circumscribed in a coaxial low-pressure gas feed-duct, the outlet of which is completely obstructed by a flat ring (1) provided with holes (2) of identical cross section, these being regularly spaced around the axis (3) of said feed ducts and all converging at the same angle on said axis (3), the peripheral low-pressure gas jets passing through the converging holes (2) and the flat ring (1) including a central hole (4) receiving the central high-pressure gas jet.

7. Injector according to Claim 6, **characterized in that** the cross sections of the holes have circular perimeters.

8. Burner comprising one or more injectors according to either of Claims 6 and 7.

9. Furnace, especially an end-fired furnace or a side-fired furnace, comprising at least one burner according to Claim 8.

10. Application of the process according to one of Claims 1 to 5 or of the injector according to either of Claims 6 and 7 or of the burner according to Claim 8 or of the furnace according to Claim 9 for limiting NOₓ emissions.
